# EUROPÄISCHE PATENTSCHRIFT

(11) **EP 1 049 894 B1**
(45) Veröffentlichungstag und Bekanntmachung des Hinweises auf die Patenterteilung: **26.09.2001**
(21) Anmeldenummer: 98965631.9
(22) Anmeldetag: 15.10.1998
(51) Int. Cl.: F16L 1/00

(54) **Flanschvorrichtung**
Flange device
Dispostif de brides

(30) Priorität: 16.10.1997 DE 29718382 U
(43) Veröffentlichungstag der Anmeldung: 08.11.2000
(73) Patentinhaber: Aeroquip-Vickers International GmbH, 76532 Baden-Baden (DE)
(72) Erfinder: MERTEN, John, F., D-76547 Sinzheim (DE)
(74) Vertreter: Gleiss & Grosse
(86) Internationale Anmeldenummer: EP9806541
(87) Internationale Veröffentlichungsnummer: WO9919651

(56) Entgegenhaltungen:
- US-A- 4 753 268
- US-A- 4 920 766
- US-A- 5 387 014

## Beschreibung

Die Erfindung betrifft eine Flanschvorrichtung zur Befestigung an zwei rohrförmigen Elementen.

Flanschvorrichtungen werden im allgemeinen zur Befestigung von Schläuchen oder Rohren an Trägerteilen verwendet. Zumeist sind die Flanschvorrichtungen fest mit den Rohren verbunden, mit dem Nachteil, daß eine Umformung der Rohrenden durch die Flanschvorrichtungen behindert wird.

Ein weiterer Nachteil dieser Flanschvorrichtungen ist darin zu sehen, daß sie nicht beziehungsweise nur schwer demontierbar sind.

Die Aufgabe der vorliegenden Erfindung besteht deshalb darin, eine Flanschvorrichtung vorzusehen, die problemlos ein- und ausbaubar ist und die eine Umformung der Rohrenden ohne weiteres ermöglicht.

Diese Aufgabe wird von einer Flanschvorrichtung gelöst, die die Merkmale des Anspruchs 1 aufweist. Die erfindungsgemäße Flanschvorrichtung ist dadurch gekennzeichnet, daß ein erstes und ein zweites Flanschelement vorgesehen sind, deren jedes einen Durchbruch und eine randoffene im wesentlichen halbkreisförmige Aussparung aufweist, daß der Durchbruch einen ersten im wesentlichen halbkreisförmigen und einen zweiten im wesentlichen halbkreisförmigen Abschnitt umfaßt, wobei der Radius des ersten Abschnitts kleiner ist als der Radius des zweiten Abschnitts, und daß die beiden Flanschelemente miteinander verbindbar ausgebildet sind, derart, daß jeweils die Aussparung des einen Flanschelements mit dem ersten Abschnitt des Durchbruchs des anderen Flanschelements eine im wesentlichen kreisförmige Öffnung zur Aufnahme des rohrförmigen Elements bilden.

Der Vorteil dieser Flanschvorrichtung ist darin zu sehen, daß die Rohre erst nach sämtlichen Umform-Operationen an der Flanschvorrichtung befestigt werden, so daß die Rohre in voller Länge umgeformt werden können, ohne daß die Flanschvorrichtung dies behindern würde. Ein weiterer Vorteil der Flanschvorrichtung ist darin zu sehen, daß die Rohre problemlos ein- und ausbaubar sind, wobei bei einer genauen Paßform der Flanschelemente die Konzentrizität und Achsparallelität gewährleistet wird.

In einer vorteilhaften Weiterbildung der Erfindung weist der erste Abschnitt eines jeden Durchbruchs einen Kragen auf, der den ersten Abschnitt halbkreisförmig umgibt. Der Kragen hat den Vorteil, daß das an der Flanschvorrichtung befestigte Rohr einen besseren Halt und eine bessere Abstützung erfährt.

In einer vorteilhaften Weiterbildung der Erfindung weisen beide Flanschelemente eine Bohrung auf, die in zusammengestecktem Zustand der beiden Flanschelemente fluchten, wobei vorzugsweise eine Spannhülse die Bohrungen durchgreift. Der Vorteil dieser Ausgestaltung ist darin zu sehen, daß mit wenigen Bauteilen eine Fixierung der beiden Elemente möglich ist.

In einer vorteilhaften Weiterbildung der Erfindung ist die Höhe des Kragens des einen Flanschelements an die Dicke des anderen Flanschelements angepaßt. Damit wird erreicht, daß an der äußeren Seite der Flanschvorrichtung keine Stufen sondern vielmehr ebene Flächen entstehen.

In einer vorteilhaften Weiterbildung der Erfindung weist der erste Abschnitt und/oder die Aussparung der beiden Flanschelemente einen sich radial nach innen erstreckenden Vorsprung auf. Hiermit erreicht man mit einfachen Mitteln eine Verdrehsicherung für das rohrförmige Element.

Selbstverständlich sind auch beliebige Kombinationen der genannten Weiterbildungen möglich.

Die Erfindung wird nun anhand von Ausführungsbeispielen mit Bezug auf die Zeichnung näher erläutert. Dabei zeigen:
- Figuren 1a bis c: eine Flanschvorrichtung gemäß einem ersten Ausführungsbeispiel in mehreren Ansichten,
- Figur 1d: eine schematische Darstellung eines Rohrs, und
- Figuren 2a bis c: eine Flanschvorrichtung gemäß einem zweiten Ausführungsbeispiel in verschiedenen Ansichten.

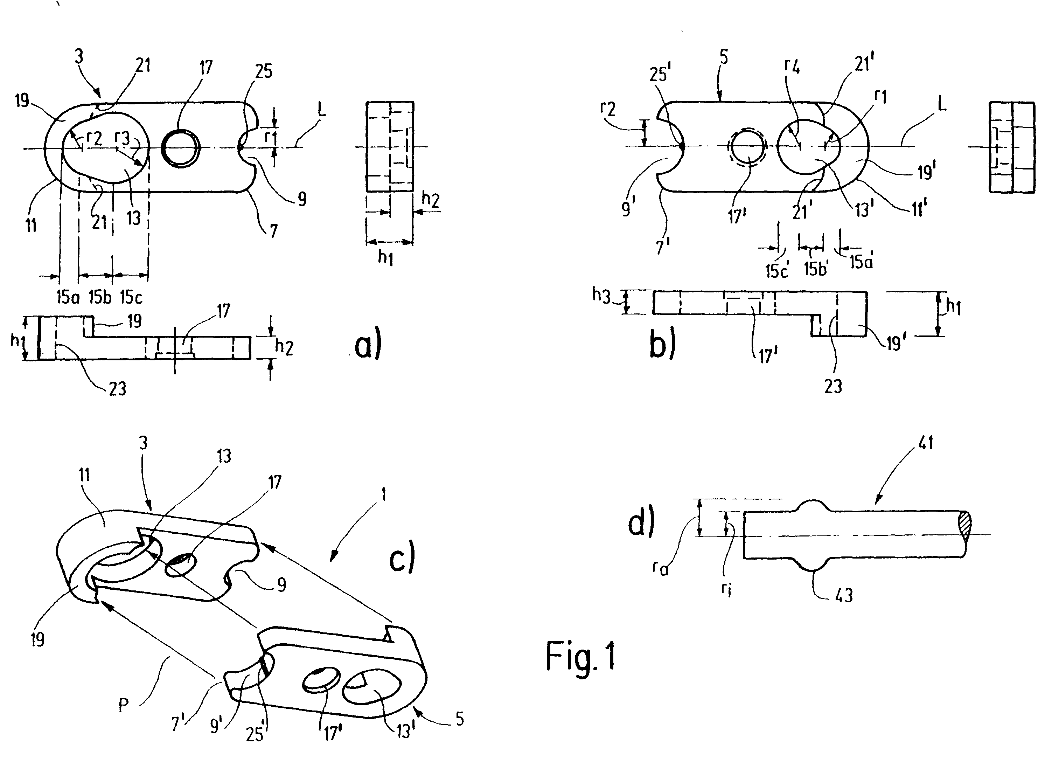

In Figur 1c ist ein Flansch 1 in perspektivischer Ansicht gezeigt. Der Flansch 1 besteht aus einem ersten Flanschelement 3 und einem zweiten Flanschelement 5, die wie Pfeile P andeuten, aufeinander legbar sind.

Das erste Flanschelement 3 weist -wie in Figur 1a dargestellt- eine längliche Form auf und ist bezüglich einer Längsachse L symmetrisch aufgebaut. Das Flanschelement 3 weist an seinem einen Längsende 7 eine im wesentlichen halbkreisförmige Ausnehmung 9 auf, die einen Radius r1 besitzt.

Das gegenüberliegende Längsende 11 des Flanschelements 3 ist halbkreisförmig ausgebildet. Im Bereich dieses Längsendes 11 ist ein Durchbruch 13 vorgesehen, dessen Symmetrieachse mit der Längsachse L zusammenfällt und der sich in drei Längsabschnitte 15a, 15b, 15c gliedert. Der dem Längsende 11 zugewandte Längsabschnitt 15a des Durchbruchs 13 ist - in Draufsicht- halbkreisförmig ausgebildet und weist einen Radius r2 auf. Der dem Längsende 7 zugewandte Längsabschnitt 15c ist ebenfalls halbkreisförmig ausgebildet und weist einen Radius r3 auf. Der die vorgenannten beiden Längsabschnitte 15a, 15c verbindende Längsabschnitt 15b ist in Draufsicht trapezförmig ausgebildet. Der Darstellung in Figur 1 ist deutlich zu entnehmen, daß der Radius r3 des Längsabschnitts 15c größer ist als der Radius r2 des Längsabschnitts 15a.

Im mittleren Längsbereich des Flanschelements 3 ist symmetrisch zur Längsachse L eine Bohrung 17 vorgesehen.

In der Seitenansicht des Flanschelements 3 ist zu erkennen, daß im Bereich des Längsendes 11 ein Kragen 19 vorgesehen ist, der halbkreisförmig den Längsabschnitt 15a des Durchbruchs 13 umgibt. Die beiden Enden sind mit gestrichelten Linien 21 dargestellt. Der Kragen 19 dient dazu, die Innenfläche 23 des Durchbruchs 13 im Bereich des Längsabschnitts 15a zu vergrößern. In der Seitenansicht ist deutlich zu erkennen, daß die Hohe h1 des Kragens die Höhe h2 des eigentlichen Flanschelements 3 übersteigt.

Weiterhin ist in Figur 1a ein Vorsprung 25 zu erkennen, der im Bereich der Aussparung 9 an dessen Seitenfläche vorgesehen ist.

Das zweite Flanschelement 5 weist -wie in Figur 1b dargestellt- ebenfalls eine längliche Form auf und ist symmetrisch zu der Längsachse L ausgebildet. Die Länge und die Breite des Flanschelements 5 entspricht der Länge und der Breite des Flanschelements 3.

Das Flanschelement 5 weist an seinem einen Längsende 7' eine Aussparung 9' auf, die halbkreisförmig ausgebildet ist. Der Radius dieser Ausnehmung 9' entspricht dem Radius r2 des Längsabschnitts 15a des Flanschelements 3. Im mittleren Längsbereich des Flanschelements 5 ist eine Bohrung 17' vorgesehen, deren Bohrungsdurchmesser jenem der Bohrung 17 des Flanschelements 3 entspricht.

Im Bereich des halbkreisförmig ausgebildeten Längsendes 11' ist ein Durchbruch 13' vorgesehen, der sich ebenfalls in drei Längsabschnitte 15a' bis 15c' gliedert. Der dem Längsende 11' zugewandte Längsabschnitt 15a' sowie der Längsabschnitt 15c' sind halbkreisförmig ausgebildet, wobei der Radius des Längsabschnitts 15a' dem Radius r1 der Aussparung 9 des Flanschelements 3 entspricht. Der Radius r4 des Längsabschnitts 15c' ist größer gewählt als der Radius r1. Der Längsabschnitt 15b' ist -in Draufsicht- trapezförmig ausgebildet.

Am Länosende 11' ist ein Kragen 19' vorgesehen, der den Längsabschnitt 15a' halbkreisförmig umgibt, wobei die beiden Enden des Kragens 19' durch Linien 21' dargestellt sind. Die Höhe des Flanschelements 5 im Bereich des Kragens 19' entspricht der Höhe h1 des Flanschelements 3 im Bereich des Kragens 19. Die Höhe h3 des Flanschelements 5 abseits des Kragens 19' entspricht der Höhe h1 minus h2.

Auch die Aussparung 9' des Flanschelements 5 weist einen Vorsprung 25' auf. Je nach Anwendungsfall verläuft der Vorsprung 25' über einen Teil oder die gesamte Höhe h3 des Flanschelements 5.

Wie sich aus der Figur 1c ergibt, sind die Abmessungen der beiden Flanschelemente 3, 5 so gewählt, daß sie zur Bildung des Flansches 1 aufeinanderlegbar sind, wobei die Bohrungen 17, 17' dann fluchten. Das Längsende 7' des Flanschelements 5 liegt dabei im Bereich des Längsendes 11 des Flanschelements 3, während das Längsende 11' des Flanschelements 5 benachbart zum Längsende 7 des Flanschelements 3 angeordnet ist. Im zusammengesteckten Zustand der beiden Flanschelemente 3, 5 bildet der Längsabschnitt 15a des Flanschelements 3 zusammen mit der Aussparung 9' des Flanschelements 5 einen kreisförmigen Durchbruch mit dem Radius r2. Die beiden Längsabschnitte 15b, 15c des Flanschelements 3 selbst sind durch einen Teil des Flanschelements 5 abgedeckt.

Auf der gegenüberliegenden Seite bildet die Aussparung 9 mit dem Längsabschnitt 15a' des Flanschelements 5 ebenfalls einen kreisförmigen Durchbruch mit dem Radius r1. Die beiden Langsabschnitte 15b', 15c' werden dabei durch das Flanschelement 3 abgedeckt.

Zur Befestigung der beiden Flanschelemente 3, 5 ist eine -nicht dargestellte- Spannhülse vorgesehen, die durch die Bohrungen 17, 17' gesteckt und dann fixiert wird.

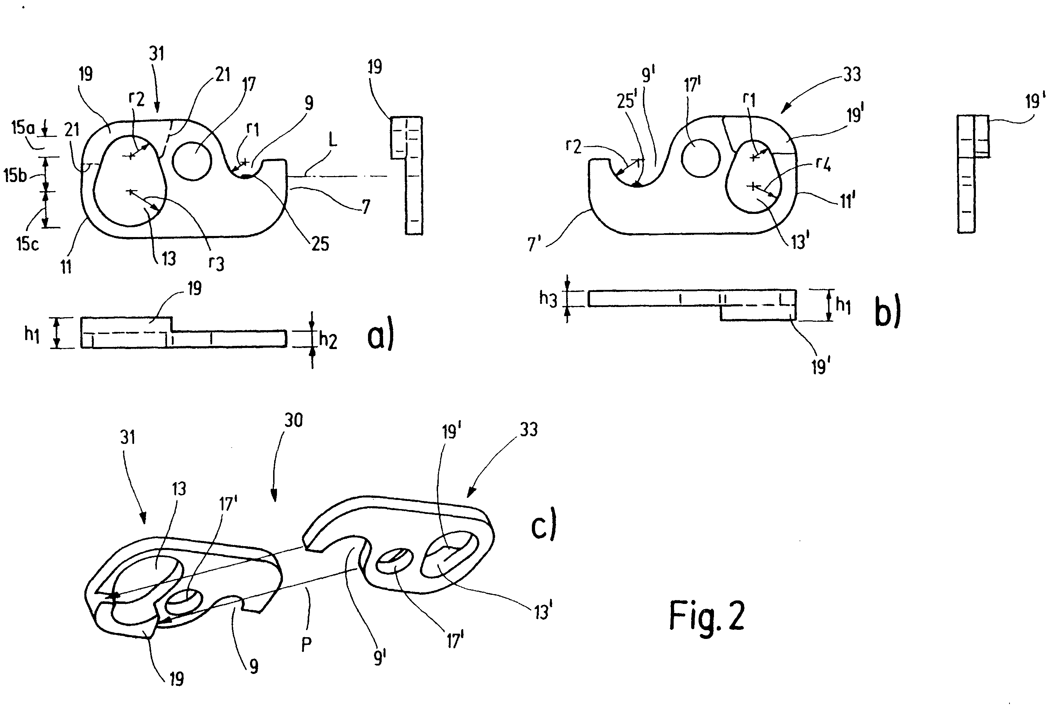

Figur 2 zeigt ein zweites Ausführungsbeispiel eines Flansches 30, der ebenfalls aus zwei Flanschelementen 31, 33 gebildet wird. Zur Vereinfachung sind Teile der beiden Flanschelemente 31, 33, die mit Teilen der beiden Flanschelemente 3, 5 übereinstimmen, mit gleichen Bezugszeichen gekennzeichnet. Auf eine nochmalige Beschreibung dieser Teile wird deshalb verzichtet.

Bei beiden Flanschelementen 31, 33 handelt es sich ebenfalls um längliche Bauteile, die jedoch nicht symmetrisch bezüglich der Längsachse L ausgestaltet sind. Vielmehr erstrecken sich die beiden Durchbrüche 13, 13' beziehungsweise deren Symmetrieachsen senkrecht zur Längsachse L, so daß also die Längsabschnitte 15a, 15b, 15c und 15 a', 15b', 15c' in der Zeichnung vertikal verlaufen. Darüber hinaus öffnen sich die beiden Aussparungen 9, 9' nicht zu einem Längsende sondern vielmehr zu einer Seite des entsprechenden Flanschelements 31 beziehungsweise 33.

Im zusammengebauten Zustand der beiden Flanschelemente 31, 33 bildet die Aussparung 9' zusammen mit dem Längsabschnitt 15a des Durchbruchs 13 einen kreisförmigen Durchbruch mit dem Radius r2, während der Längsabschnitt 15a' des Flanschelements 33 mit der Aussparung 9 des Flanschelements 31 einen kreisförmigen Durchbruch mit dem Radius r1 bildet. Auch bei diesem Ausführungsbeispiel werden die beiden Flanschelemente 31, 33 mittels einer Spannhülse, die durch die Bohrungen 17, 17' hindurchgreift, gehalten.

Die beiden Flansche 1, 30 werden beispielsweise im Kfz-Bereich zur Befestigung von Rohren an Fahrzeugteilen verwendet. Rein schematisch ist in Figur 1d ein einzelnes Rohr 41 dargestellt. Dieses Rohr 41 weist in dessen Endbereich einen Wulst 43 auf, der beispielsweise durch Umformen des Rohrs hergestellt wird. Der Radius des Rohrs 41 ist mit ri und der Radius der Wulst 43 mit ra bezeichnet.

Zur Befestigung des Rohrs 41 am Flansch 1 beziehungsweise 30 wird das den Wulst 43 aufweisende Rohrende durch den Durchbruch 13 des Flanschelements 3 hindurchgesteckt, wobei der Radius r3 zumindest dem Radius ra entsprechen muß. Anschließend wird das Flanschelement 5 an das Flanschelement 3 gebracht, derart, daß das Rohr 41 von der Aussparung 9' zumindest teilweise umschlossen wird. Zur Befestigung des Rohrs 41 wird dann eines der beiden Flanschelemente 3, 5 in Längsrichtung verschoben, wodurch das Rohr 41 aus dem Längsabschnitt 15c des Durchbruchs 13 in den Längsabschnitt 15a verlagert wird. Um eine sichere Befestigung zu bewirken, ist der Radius r2 so gewählt, daß er dem Radius ri des Rohrs 41 entspricht. In der Endposition liegt ein Längsabschnitt des Rohrs 41 somit an der Innenfläche 23 des Kragens 19 und an der Innenfläche der Aussparung 9' an. Zur Fixierung der beiden Flanschelemente 3, 5 wird in dieser Position eine Spannhülse in die Bohrung 17, 17' eingepaßt. Durch diese Spannhülse läßt sich dann anschließend der Flansch 1, 30 mittels einer die Spannhülse durchgreifenden Schraube am Fahrzeug befestigen.

Durch die Verlagerung in Längsrichtung des Flanschelements 5 beziehungsweise des Flanschelements 3 drückt sich der Vorsprung 25' in das Rohr 41 ein, ohne dies selbst zu beschädigen. Es wird hiermit eine Verdrehsicherung ermöglicht.

In gleicher Weise erfolgt auch die Befestigung eines zweiten Rohrs 41 mittels der Aussparung 9 und dem Durchbruch 13'.

Die Befestigung zweier Rohre 41 erfolgt mit der Flanschvorrichtung 30 in ähnlicher Weise, wobei lediglich statt der Längsverschiebung der beiden Flanschelemente 31, 33 eine Drehbewegung notwendig ist, um die Rohre in die Längsabschnitte 15a beziehungsweise 15a' zu bringen.

## Patentansprüche

1. Flanschvorrichtung zur Befestigung an zwei rohrförmigen Elementen (41), **dadurch gekennzeichnet, daß**
ein erstes (3; 31) und ein zweites (5; 33) Flanschelement vorgesehen sind, deren jedes einen Durchbruch (13, 13') und eine randoffene im wesentlichen halbkreisförmige Aussparung (9, 9') aufweist,
daß der Durchbruch (13, 13') einen ersten im wesentlichen halbkreisförmigen (15a, 15a') und einen zweiten im wesentlichen halbkreisförmigen (15c, 15c') Abschnitt umfaßt, wobei der Radius des ersten Abschnitts 15a, 15a') kleiner ist als der Radius des zweiten Abschnitts (15c, 15c'), und
daß die beiden Flanschelemente (3,5; 31,33) miteinander verbindbar ausgebildet sind, derart, daß jeweils die Aussparung (9, 9') des einen Flanschelements (3, 5; 31, 33) mit dem ersten Abschnitt (15a, 15a') des Durchbruchs (13) des anderen Flanschelements (5, 3; 33, 31) eine im wesentlichen kreisförmige Öffnung zur Aufnahme des rohrförmigen Elements (41) bilden.

2. Flanschvorrichtung nach Anspruch 1, **dadurch gekennzeichnet, daß** der erste Abschnitt (15a, 15a') eines jeden Durchbruchs (13, 13') einen Kragen (19, 19') aufweist, der den ersten Abschnitt halbkreisförmig umgibt.

3. Flanschvorrichtung nach Anspruch 1 oder 2, **dadurch gekennzeichnet, daß** beide Flanschelemente (3, 5; 31, 33) eine Bohrung (17, 17') aufweisen, die in zusammengestecktem Zustand der beiden Flanschelemente fluchten.

4. Flanschvorrichtung nach Anspruch 3, **dadurch gekennzeichnet, daß** eine Spannhülse vorgesehen ist, die die beiden Bohrungen (17, 17') durchgreift und die Flanschelemente zusammenhält.

5. Flanschvorrichtung nach Anspruch 2, **dadurch gekennzeichnet, daß** die Höhe des Kragens (19, 19') des einen Flanschelements der Dicke des anderen Flanschelements entspricht.

6. Flanschvorrichtung nach einem der vorhergehenden Ansprüche, **dadurch gekennzeichnet, daß** der erste Abschnitt (15a, 15a') und/oder die Aussparung (9, 9') der beiden Flanschelemente (3, 5; 31, 33) einen sich radial nach innen erstreckenden Vorsprung aufweist, der als Verdrehsicherung für das rohrförmige Element (41) dient.

## Claims

1. Flange device for fastening onto two tubular elements (41), **characterized in that**
a first flange element (3; 31) and a second flange element (5; 33) are provided, each having an aperture (13, 13') and an open-edged, essentially semicircular cutout (9, 9'),
in that the aperture (13, 13') comprises a first, essentially semicircular section (15a, 15a') and a second, essentially semicircular section (15c, 15c'), the radius of the first section (15a, 15a') being smaller than the radius of the second section (15c, 15c'), and
in that the two flange elements (3, 5; 31, 33) are designed such that they can be connected to each other in such a manner that in each case the cutout (9, 9') of the one flange element (3, 5; 31, 33) forms, with the first section (15a, 15a') of the aperture (13) of the other flange element, (5, 3; 33, 31) an essentially circular opening for receiving the tubular element (41).

2. Flange device according to Claim 1, **characterized in that** the first section (15a, 15a') of each aperture (13, 13') has a collar, (19, 19') which semicircularly surrounds the first section.

3. Flange device according to Claim 1 or 2, **characterized in that** both flange elements (3, 5; 31, 33) have a hole (17, 17'), which holes are aligned when the two flange elements are plugged together.

4. Flange device according to Claim 3, **characterized in that** a clamping sleeve which reaches through the two holes (17, 17') and holds the flange elements together is provided.

5. Flange device according to Claim 2, **characterized in that** the height of the collar (19, 19') of the one flange element corresponds to the thickness of the other flange element.

6. Flange device according to one of the preceding claims, **characterized in that** the first section (15a, 15a') and/or the cutout (9, 9') of the two flange elements (3, 5; 31, 33) has/have a projection which extends radially inwards and is used for the tubular element (41) as a means for securing it against rotation.

## Revendications

1. Dispositif à brides destiné à être fixé contre deux éléments tubulaires (41), **caractérisé en ce qu'**il est prévu un premier (3 ; 31) et un second (5 ; 33) élément de bride, parmi lesquels chaque élément comporte un ajour (13, 13') et un évidement (9, 9') sensiblement semi-circulaire ouvert sur le bord, en ce que l'ajour (13, 13') comporte une première partie (15a, 15a') sensiblement semi-circulaire et une seconde partie (15c, 15c') sensiblement semi-circulaire, le rayon de la première partie (15a, 15a') étant inférieur au rayon de la seconde partie (15c, 15c'), et en ce que les deux éléments de bride (3, 5 ; 31, 33) sont conçus de manière à pouvoir être assemblés l'un avec l'autre, de telle sorte que, dans chaque cas, l'évidement (9, 9') de l'un des éléments de bride (3, 5 ; 31, 33) forme avec la première partie (15a, 15a') de l'ajour (13) de l'autre élément de bride (3, 5 ; 31, 33) une ouverture sensiblement circulaire destinée à recevoir l'élément tubulaire (41).

2. Dispositif à brides selon la revendication 1, **caractérisé en ce que** la première partie (15a, 15a') de chaque ajour (13, 13') est munie d'une collerette (19, 19') qui entoure la première partie en formant un demi-cercle.

3. Dispositif à brides selon la revendication 1 ou 2, **caractérisé en ce que** les deux éléments de bride (3, 5 ; 31, 33) comportent une forure (17, 17'), lesquelles forures sont alignées lorsque les deux éléments de bride sont en position assemblée.

4. Dispositif à brides selon la revendication 3, **caractérisé en ce qu'**il est prévu un manchon de serrage qui passe à travers les deux forures (17, 17') et maintient ensemble les deux éléments de bride.

5. Dispositif à brides selon la revendication 2, **caractérisé en ce que** la hauteur de la collerette (19, 19') de l'un des éléments de bride correspond à l'épaisseur de l'autre élément de bride.

6. Dispositif à brides selon l'une quelconque des revendications précédentes, **caractérisé en ce que** la première partie (15a, 15a') et/ou l'évidement (9, 9') des deux éléments de bride (3, 5 ; 31, 33) comporte(nt) une saillie qui s'étend dans le sens radial vers l'intérieur et qui est utilisée pour empêcher tout mouvement de rotation de l'élément tubulaire (41).
